# EUROPEAN PATENT SPECIFICATION

(11) **EP 3 585 165 B1**
(45) Date of publication and mention of the grant of the patent: **24.04.2024**
(21) Application number: 18717743.1
(22) Date of filing: 21.02.2018
(51) Int. Cl.: A01K 73/04, A01K 69/10

(54) **DEVICE FOR CATCHING MARINE ORGANISMS**
VORRICHTUNG ZUM FANGEN VON MEERESORGANISMEN
DISPOSITIF PERMETTANT DE CAPTURER DES ORGANISMES MARINS

(30) Priority: 22.02.2017 NO 20170257
(43) Date of publication of application: 01.01.2020
(73) Proprietor: Selstad AS, 6701 Måløy (NO)
(72) Inventor: SELSTAD, Hans-Petter, 6700 Måløy (NO)
(74) Representative: Zacco Norway AS
(86) International application number: PCT/NO2018/050047
(87) International publication number: WO 2018/156028

(56) References cited:
- CN-A- 101 496 505
- GB-A- 154 116
- US-A- 4 514 924

## Description

The present invention relates to a device for catching marine organisms.

### BACKGROUND

Various methods exist for catching and keeping marine animals underwater, such as trawling, and trapping. For example, in conventional methods of trawling, the trawl, comprising a net structure forming a trawl bag, is towed behind a vessel and weights, floats and trawl doors are used to spread open the opening of the trawl and to ensure that the trawl has the intended form when towed through the water. This includes, for example, ensuring that the internal volume of the trawl bag is sufficiently large throughout its length towards the tail end (cod end) of the trawl.

In various designs of fish traps, such as pot traps, crab traps and fyke nets, a net is used to make up a container with an opening for the animal to enter. The animal is trapped, and kept until the trap is retrieved and emptied. The net is typically held in shape by means of a frame of wire, pins or hoops.

It is generally important in such devices for catching and/or keeping animals that the shape and form of the device is maintained in the correct, design form. This is important in order to optimize the performance of the device, such as maintaining the opening of a trawl spread open to maximize catch, and to avoid unnecessary stress or damage to the animals, for example if the tail end of a trawl or a trap collapses (partly or fully) on the animals. At the same time, it is a requirement that such devices are compact and easy to handle, since they will generally be handled and temporarily stored on vessels or boats with limited deck space.

Prior art which may be useful to understand the background includes WO 2007/108702, which describes a trawl device having elongate hydrofoils attached to the trawl opening, and GB 2 187 921 A, which describes a net having a pressurized, flexible tube. US 4 514 924 A shows an apparatus and method for fishing by trawl, and CN 101 496 505 A appears to relate to a net pen with inflatable parts. GB 154 116 A describes a fish trap using compressed air to create buoyancy to a portion of the fish trap.

The present invention has the objective to provide a device for catching and/or keeping marine animals which provides advantages over known solutions and techniques in the above-mentioned or other areas.

### SUMMARY

The present invention defined in claim 1 provides a device for catching living organisms underwater having:
a side, the side being made up of a pliable material and defining a part of a container, an elongate pliable fluid conduit extending along and being fixed to the side,
a supply conduit connected to and configured for supplying a pressurized fluid to the fluid conduit,
wherein the device is a trawl,
wherein the container is a trawl bag and the fluid conduit is arranged around the trawl bag,
the fluid conduit is arranged to dilate the container when supplied with pressurized fluid,
wherein the pressurized fluid is a liquid,
the fluid conduit is arranged primarily in a tail end of the device and the side defines part of an arcuate wall section of the container and the fluid conduit is arranged along the arcuate wall section.

In an embodiment, at least a part of the side is made up of a net. In an embodiment, at least a part of the side is made up of a permeable or non-permeable cloth.

In an embodiment, the side defines a conical or frustoconical section of the container and the fluid conduit is arranged around the conical or frustoconical section.

In an embodiment, the fluid conduit extends around the conical or frustoconical section in a spiraling pattern. In embodiments, the fluid conduit is arranged on the side in a parallel side-by-side pattern, in an intercrossing pattern, or in a tortuous pattern.

In an embodiment, the supply conduit is connected with a towing cable arranged for towing the device in water. In an embodiment, the supply conduit is made of a pliable material.

According to the invention defined in claim 9, there is provided a method for dilating a container in a device for catching living organisms underwater, comprising the steps of providing a device for catching living organisms underwater, and pressurizing the supply conduit with a fluid.

In an embodiment, the method further comprises the step of deploying the device into water prior to carrying out the step of pressurizing the supply conduit with a fluid.

In an embodiment, the device is a trawl and the method further comprises the step of towing the trawl by means of at least one cable while pressurizing the supply conduit. In an embodiment, the method further comprises the step of adjusting a pressure in the supply conduit in response to a change in the operating depth of the trawl.

According to the invention defined in claim 13, there is provided a method for handling a device for catching living organisms underwater, comprising the steps: removing the device from water, depressurizing the supply conduit, and storing the device for transport.

### BRIEF DESCRIPTION OF THE DRAWINGS

Illustrative embodiments of the present invention will now be described with reference to the appended drawings, in which:
Figure 1 shows a trawl according to an embodiment,
Figure 2 shows a trawl according to an embodiment,
Figure 3 shows a trawl according to an embodiment,
Figure 4 shows a trap according to an example, and
Figure 5 shows arrangements of a fluid conduit according to various embodiments.

### DETAILED DESCRIPTION

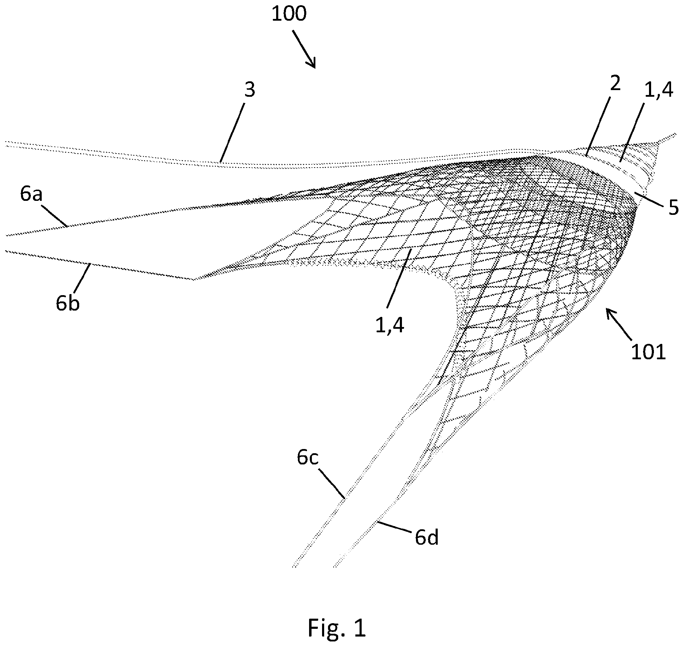

Figure 1 shows a device 100 according to an embodiment. The device 100 is a trawl for catching fish by towing the trawl 100 behind a vessel (not shown) by cables 6a-d. The trawl 100 has a side 1 defining the trawl bag 101, being made of a pliable, flexible material. In the embodiment shown, the trawl bag 101 is made up of a net 4,5, where the net 4,5 becomes gradually finer towards the tail end (cod end) of the trawl.

An elongate flexible fluid conduit 2 extends along, and is fixed to, the side 1. The conduit 2 is a pliable, flexible hose made of, for example, a tarpaulin, a plastic material, or any other suitable material. A supply conduit 3 extends from the vessel to the trawl, and is fluidly connected to the fluid conduit 2. The supply conduit 3 may be made of the same material as the fluid conduit 2, or of a different material, which may or may not be pliable and flexible. A pressurized fluid supply is arranged on the vessel for providing pressurized fluid. The pressurized fluid is liquid.

When the fluid conduit 2 is supplied with pressurized fluid via the supply conduit 3, it becomes less flexible, i.e. stiffer. The fluid conduit 2 is arranged on the trawl such as to, when pressurized, contribute to dilate the trawl bag 101. The fluid conduit 2 thereby contributes to bringing the trawl bag 101 to its design form, and keeping the trawl bag 101 in its design form. In the embodiment shown in Fig. 1, the fluid conduit 2 is arranged primarily in the tail end of the trawl. This helps ensure that the tail end retains its design size and form during use, also when subjected to external forces, for example from the caught fish, towing forces and/or water currents.

In the embodiment shown in Fig. 1, the tail end of the trawl forms a conical section, and the fluid conduit 2 is arranged around the conical section in a spiraling pattern. Optionally, the fluid conduit 2 may be arranged only around a part of the conical section, or around a frustoconical section of the trawl, in the same manner.

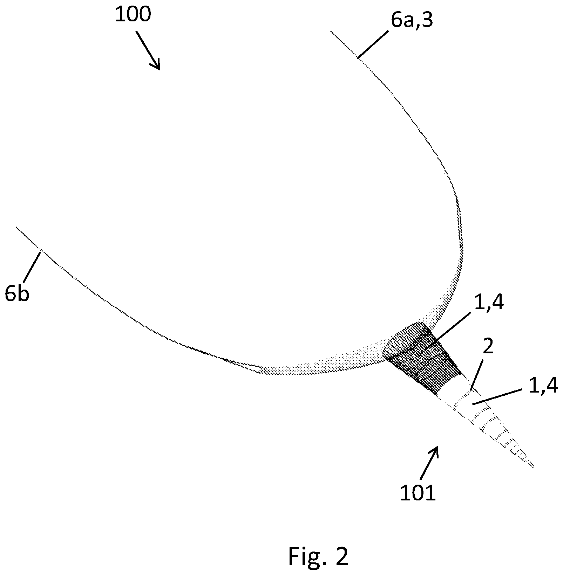

Figure 2 illustrates another embodiment of a trawl. In the embodiment shown in Fig. 2, the supply conduit 3 is incorporated into one of the cables 6a,6b. This simplifies the trawl 100 and reduces the risk of the supply conduit 3 being damaged or interrupting the operation of the vessel or the trawl 100. In the embodiment shown in Fig. 2, the fluid conduit 2 is arranged in a side-by-side pattern on the tail end of the trawl, wherein the fluid conduit 2 forms rings arranged annularly around the generally conical tail end of the trawl 100.

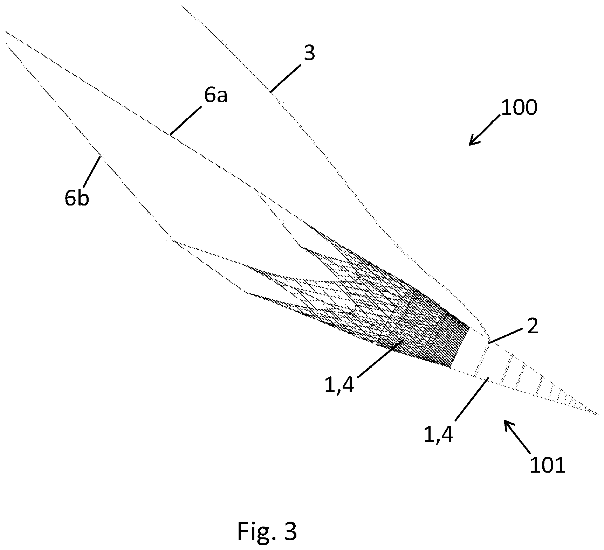

Figure 3 illustrates another embodiment of a trawl according to the present invention.

In the embodiments shown in Figs 1-3, the fluid conduit 2 can contribute to the trawl maintaining its design shape and form during operation, and thus reduces the risk of damage to the catch (e.g. from parts of the trawl collapsing on the fish), lost catch (e.g. during hoisting of the trawl to the vessel), or reduced performance (e.g. if the trawl 100 does not have its design shape during use).

In one embodiment, the trawl 100 can be deployed into the water from the vessel before pressurizing the supply conduit 3 and the fluid conduit 2. This may allow the trawl to be moved to its correct operating depth before the fluid conduit 2 is pressurized, which may ease deployment of the trawl 100.

In one embodiment, the pressure in the supply conduit 3,3a,3b and the fluid conduit 2 is regulated from the vessel according to the operational depth of the trawl. By adjusting the pressure supplied via the supply conduit 3,3a,3b, one can ensure that the forces acting on the trawl bag 101 from the fluid conduit 2 are sufficiently high to maintain the shape and form of the trawl bag 101, also in the case of varying water depths, i.e. varying pressure in the surrounding seawater. Further, this allows using a higher pressure when the trawl 100 is used at deep waters, while ensuring that the conduits 2,3,3a,3b do not risk damage or breakage from large pressure differences when the trawl 100 is brought from a deep to a shallower operating position.

By depressurizing the supply conduit 3,3a,3b and the fluid conduit 2 when removing the trawl out of the water, their flexibility is increased which eases the storage of the trawl 100 on the vessel and/or on shore. In one embodiment, the conduits 2,3,3a,3b are depressurized and the trawl 100 is stowed away for transport. Consequently, according to embodiments of the present invention, one can obtain a trawl 100 which is structurally stable during operation, while being flexible and easy to handle and store.

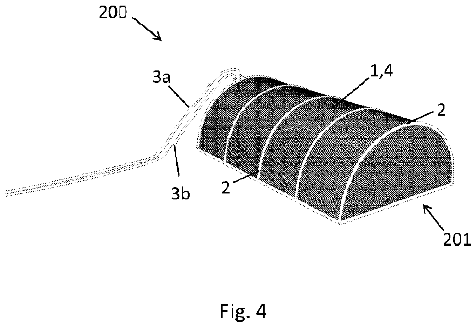

Figure 4 shows an example that is not part of the invention where the device is a trap 200. The trap 200, shown only illustratively in Fig. 4, may be of any type, such as a pot trap, crab trap, fyke net, or any other type.

The trap 200 has a container 201 with an opening (not shown) for fish or other animals to enter, in the conventional manner. A bait may, for example, be placed in the container 201 for this purpose. The container has a side 1 comprising a net 4. The side 1 may, alternatively, be a combination of a net and another material, or entirely made up of another permeable or non-permeable material, such as a tarpaulin.

Fluid conduits 2 are arranged along, and connected to, the side 1 such as to contribute to defining and maintaining the shape and form of the container 201 when in use. Supply conduits 3a,3b are provided for this purpose, equivalently as described above. The fluid conduits 2 may thus be pressurized from a surface location, e.g. a vessel or from shore.

In the embodiment shown in Fig. 4, the fluid conduit 2 is arranged along an arcuate wall section of the container 201. The fluid conduit 2 is arranged in a parallel, side-by-side pattern, however may be arranged in a number of different ways, for example one of those described below in relation to Fig. 6.

A trap 200 according to the embodiment shown in Fig. 4 provides more stability and is less sensitive to disturbances from, for example, water currents or movement of the animals inside the trap. Transport of the trap 200 is eased in that the fluid conduits 2 may be depressurised prior to storage on e.g. a vessel, and during transport, allowing the trap 200 to be stored in a very compact manner. This is an advantage for example on vessels with limited deck space. Deployment of the trap 200 is eased in that the conduits 2 may be pressurised after the trap 200 has been arranged underwater.

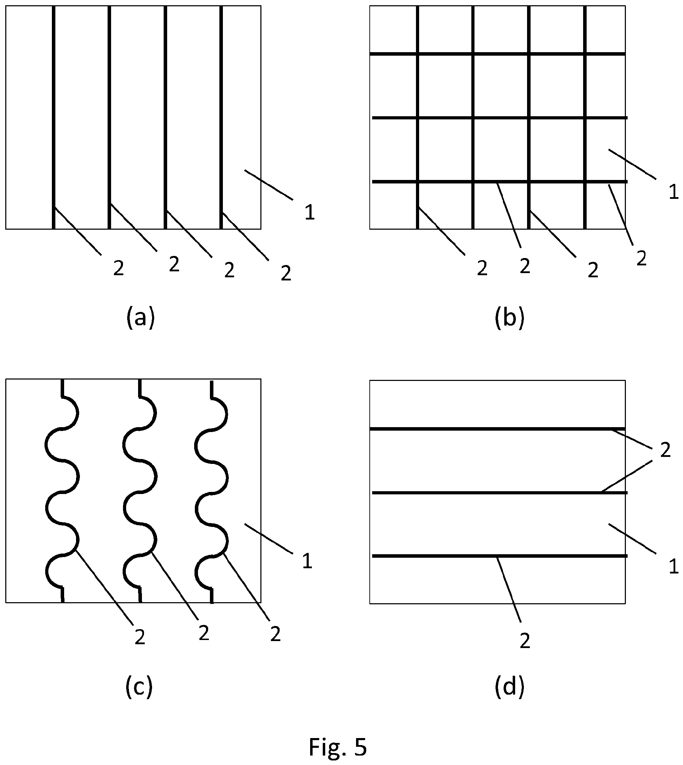

In any of the embodiments described above, the conduit or conduits 2 may be arranged in various different paths or patterns. Fig. 5 illustrates some possible patterns which may be used, including a parallel, side-by-side pattern in the vertical direction (Fig. 5(a)), a parallel, side-by-side pattern in the horizontal direction (Fig. 5(d)), an intercrossing pattern (Fig. 5(b)), and a tortuous pattern (Fig. 5(c)). Other patterns or combinations of patterns may be possible, and may be chosen depending on the specific application and the design shape of the device 100,200 to which the conduits 2 are fixed.

In any of the embodiments described above, the side 1 may comprise a net, another type of material, or a combination of the two. For example, a part or the entire side 1 may be made up of a woven material. This material may be permeable or non-permeable, for example a tarpaulin.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

The present invention is not limited to the embodiments described herein and is defined by the appended claims.

## Claims

1. A device (100) for catching living organisms underwater,
the device (100) having:
a side (1), the side (1) being made up of a pliable material and defining a part of a container (101),
an elongate pliable fluid conduit (2) extending along and being fixed to the side (1),
a supply conduit (3,3a,3b) connected to and configured for supplying a pressurized fluid to the fluid conduit (2),
wherein the device is a trawl (100),
wherein the container (101) is a trawl bag and the fluid conduit (2) is arranged around the trawl bag (101), and
wherein the fluid conduit (2) is arranged primarily in a tail end of the device (100) and that the side (1) defines part of an arcuate wall section of the container (101) and the fluid conduit (2) is arranged along the arcuate wall section,
**characterized in that**
the fluid conduit (2) is arranged to dilate the container (101) when supplied with pressurized fluid, and
wherein the pressurized fluid is a liquid.

2. A device (100) according to claim 1, wherein at least a part of the side (1) is made up of a net (4,5).

3. A device (100) according to claim 1 or 2, wherein at least a part of the side (1) is made up of a permeable or non-permeable cloth.

4. A device (100) according to any preceding claim, wherein the side (1) defines a conical or frustoconical section of the container (101) and the fluid conduit (2) is arranged around the conical or frustoconical section.

5. A device (100) according to the preceding claim, wherein the fluid conduit (2) extends around the conical or frustoconical section in a spiraling pattern.

6. A device (100) according to any preceding claim, wherein the fluid conduit (2) is arranged on the side (1)
in a parallel side-by-side pattern,
in an intercrossing pattern, or
in a tortuous pattern.

7. A device (100) according to any preceding claim, wherein the supply conduit (3,3a,3b) is connected with a towing cable (6a-d) arranged for towing the device (100) in water.

8. A device (100) according to any preceding claim, wherein the supply conduit (3,3a,3b) is made of a pliable material.

9. A method for dilating a container (101) in a device (100) for catching living organisms underwater, comprising the steps:
providing a device (100) according to any preceding claim, and
pressurizing the supply conduit (3,3a,3b) with a liquid.

10. A method according to claim 9, further comprising the step:
deploying the device (100) into water prior to carrying out the step of pressurizing the supply conduit (3,3a,3b) with the liquid.

11. A method according to any of claims 9-10, wherein the method further comprises the step of towing the trawl (100) by means of at least one cable (6a-d) while pressurizing the supply conduit (3,3a,3b).

12. A method according to the preceding claim, further comprising the step of adjusting a pressure in the supply conduit (3,3a,3b) in response to a change in the operating depth of the trawl (100).

13. A method for handling a device (100) for catching living organisms underwater, comprising the steps:
removing a device (100) according to any of claims 1-8 from water,
depressurizing the supply conduit (3,3a,3b),
storing the device (100) for transport.

## Patentansprüche

1. Vorrichtung (100) zum Fangen lebender Organismen unter Wasser,
wobei die Vorrichtung (100) Folgendes aufweist:
eine Seite (1), wobei die Seite (1) aus einem biegsamen Material besteht und einen Teil eines Behälters (101) definiert,
eine längliche biegsame Fluidleitung (2), die sich entlang der Seite (1) erstreckt und an dieser befestigt ist,
eine Zufuhrleitung (3, 3a, 3b), die mit der Fluidleitung (2) verbunden und dazu konfiguriert ist, dieser ein unter Druck stehendes Fluid zuzuführen,
wobei die Vorrichtung ein Schleppnetz (100) ist,
wobei der Behälter (101) ein Schleppnetzsack ist und die Fluidleitung (2) um den Schleppnetzsack (101) angeordnet ist, und
wobei die Fluidleitung (2) primär in einem Steert der Vorrichtung (100) angeordnet ist und die Seite (1) einen Teil eines bogenförmigen Wandabschnitts des Behälters (101) definiert und die Fluidleitung (2) entlang des bogenförmigen Wandabschnitts angeordnet ist,
**dadurch gekennzeichnet, dass**
die Fluidleitung (2) dazu angeordnet ist, den Behälter (101) zu weiten, wenn ein unter Druck stehendes Fluid zugeführt wird, und wobei das unter Druck stehende Fluid eine Flüssigkeit ist.

2. Vorrichtung (100) nach Anspruch 1, wobei mindestens ein Teil der Seite (1) aus einem Netz (4, 5) besteht.

3. Vorrichtung (100) nach Anspruch 1 oder 2, wobei mindestens ein Teil der Seite (1) aus einem durchlässigen oder undurchlässigen Stoff besteht.

4. Vorrichtung (100) nach einem der vorhergehenden Ansprüche, wobei die Seite (1) einen konischen oder kegelstumpfförmigen Abschnitt des Behälters (101) definiert und die Fluidleitung (2) um den konischen oder kegelstumpfförmigen Abschnitt angeordnet ist.

5. Vorrichtung (100) nach dem vorhergehenden Anspruch, wobei die Fluidleitung (2) sich in einem spiralförmigen Muster um den konischen oder kegelstumpfförmigen Abschnitt erstreckt.

6. Vorrichtung (100) nach einem der vorhergehenden Ansprüche, wobei die Fluidleitung (2) an der Seite (1) wie folgt angeordnet ist:
in einem parallelen Seite-an-Seite-Muster,
in einem sich kreuzenden Muster oder
in einem gewundenen Muster.

7. Vorrichtung (100) nach einem der vorhergehenden Ansprüche, wobei die Zufuhrleitung (3, 3a, 3b) mit einer Kurrleine (6a-d) verbunden ist, die zum Ziehen der Vorrichtung (100) im Wasser angeordnet ist.

8. Vorrichtung (100) nach einem der vorhergehenden Ansprüche, wobei die Zufuhrleitung (3, 3a, 3b) aus einem biegsamen Material besteht.

9. Verfahren zum Weiten eines Behälters (101) in einer Vorrichtung (100) zum Fangen lebender Organismen unter Wasser, umfassend die Schritte:
Bereitstellen einer Vorrichtung (100) nach einem der vorhergehenden Ansprüche und
Unterdrucksetzen der Zufuhrleitung (3, 3a, 3b) mit einer Flüssigkeit.

10. Verfahren nach Anspruch 9, ferner umfassend den Schritt:
Einsetzen der Vorrichtung (100) in Wasser vor Durchführen des Schritts des Unterdrucksetzens der Zufuhrleitung (3, 3a, 3b) mit der Flüssigkeit.

11. Verfahren nach einem der Ansprüche 9-10, wobei
das Verfahren ferner den Schritt zum Ziehen des Schleppnetzes (100) mittels mindestens einer Leine (6a-d), während des Unterdrucksetzens der Zufuhrleitung (3, 3a, 3b), umfasst.

12. Verfahren nach dem vorhergehenden Anspruch, ferner umfassend den Schritt zum Anpassen eines Drucks in der Zufuhrleitung (3, 3a, 3b) als Antwort auf eine Änderung in der Betriebstiefe des Schleppnetzes (100).

13. Verfahren zum Umgang mit einer Vorrichtung (100) zum Fangen lebender Organismen unter Wasser, umfassend die Schritte:
Entfernen einer Vorrichtung (100) nach einem der Ansprüche 1-8 aus dem Wasser,
Abbauen des Drucks in der Zufuhrleitung (3, 3a, 3b),
Lagern der Vorrichtung (100) für den Transport.

## Revendications

1. Dispositif (100) permettant de capturer des organismes vivants sous l'eau,
le dispositif (100) comportant :
un côté (1), le côté (1) étant constitué d'un matériau pliable et définissant une partie d'un récipient (101),
un conduit de fluide pliable allongé (2) s'étendant le long du côté (1) et étant fixé à celui-ci,
un conduit d'alimentation (3, 3a, 3b) relié et configuré pour fournir un fluide sous pression au conduit de fluide (2),
dans lequel le dispositif est un chalut (100),
dans lequel le récipient (101) est un sac de chalut et le conduit de fluide (2) est agencé autour du sac de chalut (101), et
dans lequel le conduit de fluide (2) est agencé principalement dans une extrémité arrière du dispositif (100) et le côté (1) définit une partie d'une section de paroi arquée du récipient (101) et le conduit de fluide (2) est agencé le long de la section de paroi arquée,
**caractérisé en ce que**
le conduit de fluide (2) est agencé de manière à dilater le récipient (101) lorsqu'il est alimenté en fluide sous pression, et dans lequel le fluide sous pression est un liquide.

2. Dispositif (100) selon la revendication 1, dans lequel au moins une partie du côté (1) est constituée d'un filet (4, 5).

3. Dispositif (100) selon la revendication 1 ou 2, dans lequel au moins une partie du côté (1) est constituée d'un tissu perméable ou imperméable.

4. Dispositif (100) selon une quelconque revendication précédente, dans lequel le côté (1) définit une section conique ou tronconique du récipient (101) et le conduit de fluide (2) est agencé autour de la section conique ou tronconique.

5. Dispositif (100) selon la revendication précédente, dans lequel le conduit de fluide (2) s'étend autour de la section conique ou tronconique selon un motif en spirale.

6. Dispositif (100) selon une quelconque revendication précédente, dans lequel le conduit de fluide (2) est agencé sur le côté (1)
selon un motif parallèle côte à côte,
selon un motif entrecroisé, ou
selon un motif tortueux.

7. Dispositif (100) selon une quelconque revendication précédente, dans lequel le conduit d'alimentation (3, 3a, 3b) est relié à un câble de remorquage (6a à d) agencé pour remorquer le dispositif (100) dans l'eau.

8. Dispositif (100) selon une quelconque revendication précédente, dans lequel le conduit d'alimentation (3, 3a, 3b) est constitué d'un matériau pliable.

9. Procédé de dilatation d'un récipient (101) dans un dispositif (100) permettant de capturer des organismes vivants sous l'eau, comprenant les étapes de :
fourniture d'un dispositif (100) selon une quelconque revendication précédente, et
mise sous pression du conduit d'alimentation (3, 3a, 3b) avec un liquide.

10. Procédé selon la revendication 9, comprenant en outre l'étape de :
déploiement du dispositif (100) dans l'eau avant d'effectuer l'étape de mise sous pression du conduit d'alimentation (3, 3a, 3b) avec le liquide.

11. Procédé selon l'une quelconque des revendications 9 et 10, dans lequel
le procédé comprend en outre l'étape de remorquage du chalut (100) au moyen d'au moins un câble (6a à d) tout en mettant sous pression le conduit d'alimentation (3, 3a, 3b).

12. Procédé selon la revendication précédente, comprenant en outre l'étape consistant à ajuster une pression dans le conduit d'alimentation (3, 3a, 3b) en réponse à un changement dans la profondeur de fonctionnement du chalut (100).

13. Procédé de manipulation d'un dispositif (100) permettant de capturer des organismes vivants sous l'eau, comprenant les étapes de :
retrait d'un dispositif de l'eau (100) selon l'une quelconque des revendications 1 à 8,
dépressurisation du conduit d'alimentation (3, 3a, 3b),
stockage du dispositif (100) pour le transport.
